# EUROPEAN PATENT APPLICATION

(11) **EP 3 424 342 A1**
(43) Date of publication of application: **09.01.2019**
(21) Application number: 18183909.3
(22) Date of filing: 23.09.2014
(51) Int. Cl.: A23J 3/16, A23J 3/22, A23J 3/26, A23J 3/14, A23L 13/40, A23L 35/00, A23P 30/25

(54) **MEAT TEXTURIZER**

(30) Priority: 24.09.2013 EP 13185719
(62) Divisional of application: 14781481.8
(71) Applicant: Südzucker Aktiengesellschaft Mannheim/Ochsenfurt, 68165 Mannheim (DE)
(72) Inventor: JANVARY, Liv, 67133 Maxdorf (DE); WOUTERS, Rudy, 2260 Westerlo (BE)
(74) Representative: Schrell, Andreas

(57) **Abstract**

The present invention relates to a food product comprising a co-processed mixture, which mixture comprises at least one plant protein-containing composition and at least one rice carbohydrate-containing composition, which is particularly useful as a meat extender or a meat analogue, products containing said food products and processes for obtaining them.

## Description

The present invention relates to a food product comprising a co-processed mixture, which mixture comprises at least one plant protein-containing composition and at least one rice carbohydrate-containing composition, which is particularly useful as a meat extender or a meat analogue, products containing said food products and processes for obtaining them.

Today, meat and fish are the most common sources of high protein food. However, for a number of reasons, such as high costs or health and religious concerns, there is a demand for a supply of proteins from other sources, namely plants. It is, thus, well-known to prepare meat-like food applications, such as poultry, pork, beef or fish from plant proteins or plant proteins mixed with meat. Such plant based compositions need to resemble meat also from an organoleptical point of view, which led to the development of textured products. Textured products comprising standard fillers, in particular wheat components, are frequently used for preparing meat-like food, such as Wheatmeat or Trutex.

Among the various other available plant proteins, soy protein has been utilised frequently as a protein source in textured products, due to its abundancy and low costs. However, such as evident from for instance WO 2006/130713 A1, the use of soy proteins in textured products is disadvantageous inter alia insofar, as they often confer an undesired flavour to the food. Essentially the same holds true for the use of concentrated rice protein, which, for instance according to WO 2006/130713 A1, are characterised by a strong off-taste and provoke a feeling of bitterness.

In order to overcome said strong off-taste and the feeling of bitterness WO 2006/130713 A1 teaches to carefully select the specific rice protein ingredient to be used in a textured food product. This prior art teaches to specifically select solely those specific rice protein qualities which have a low hexanal values and to carefully process such specific ingredients so as to overcome problems associated with a strong off-taste and bitterness feelings.

WO 2008/043076 A2 discloses processes to obtain structured plant protein products comprising soy isolate and wheat gluten using a specific pH-regimen.

However, there is still an unmet demand for a meat analogue or meat extender that more closely simulates the fibrous structure of animal meat and in particular has a more meat-like flavour.

The technical problem underlying the present invention is to provide products and processes to obtain them, which overcome the above identified disadvantages, in particular which products are based on plant components, in particular plant proteins and plant carbohydrates, which are suitable as, preferably protein-rich, meat extenders or meat analogues and which have a favourable taste, in particular do not provide an undesired off-taste and the typical undesired protein specific gluten or bitter soy protein taste.

The present invention unexpectedly solves said technical problem by providing the teaching according to the independent claims, in particular by a teaching according to which at least one rice carbohydrate-containing composition is used to be co-processed with at least one plant protein-containing composition, in particular gluten, a soy protein-containing component or both, that means gluten and a soy protein-containing component, so as to obtain a co-processed mixture of said at least two components. Said mixture is characterised by an improved taste in comparison to the plant protein-containing composition alone and in comparison to a non-co-processed mixture of the plant protein-containing composition and the rice carbohydrate-containing composition. Said mixture is in particular characterized by an improved taste in comparison with a co-processed composition comprising 80% of gluten and 20% of wheat flour having the same protein content as the present composition. Said mixture is characterized in particular by an improved taste in comparison with a composition comprising the same quantity and quality of ingredients as the present composition but not being co-processed. Said mixture is in particular characterized by an improved taste in comparison with a textured soy concentrate having the same protein content as the present composition. Unexpectedly, the rice carbohydrate-containing composition used to be co-processed with the at least one plant protein-containing composition masks the undesired taste of the at least one plant protein-containing composition and/or reduces or eliminates any off-taste and bitter taste.

Thus, in a particularly preferred embodiment, the present invention provides a food product comprising a co-processed mixture, in particular a texturized mixture, of
a) 50 to 95 weight-% (based on dry weight) of at least one plant protein-containing composition and
b) 5 to 50 weight-% (based on dry weight) of at least one rice carbohydrate-containing composition.

In a particularly preferred embodiment, in case the at least one plant protein-containing composition contains rice protein, the at least one plant protein-containing composition comprises a further plant protein in addition to said rice protein, wherein the amount of said further plant protein in the food product, in particular in the co-processed mixture, is greater than the amount of the rice protein, so that the amount of said rice protein in the food product, in particular in the co-processed mixture, is not the greatest protein contributor compared to the other proteins in the food product, in particular in the co-processed mixture (each based on dry weight).

In a particularly preferred embodiment, the present invention provides a food product comprising a probe co-processed mixture, in particular a texturized mixture, of
a) 50 to 95 weight-% (based on dry weight of the food product) of at least one plant protein-containing composition, wherein at most 45% (based on dry weight of total protein of the food product) of the protein in the food product is rice protein and
b) 5 to 50 weight-% (based on dry weight of the food product) of at least one rice carbohydrate-containing composition.

In a preferred embodiment, at most 44%, at most 40%, at most 30%, at most 20%, at most 10%, at most 5% and most preferably at most 1% (based on dry weight of total protein of the food product) of the protein in the food product is a rice protein.

Accordingly, the co-processed mixture comprises at least two components A) and B), namely one plant protein-containing composition (component A), which serves as a plant protein source and at least one rice carbohydrate-containing composition (component B), which serves as carbohydrate source.

In a preferred embodiment of the present invention, the co-processed mixture comprises 51 to 95, preferably 55 to 95, preferably 60 to 90, preferably 65 to 85 and preferably 70 to 80 weight-% of the at least one plant protein-containing composition.

In furthermore preferred embodiment of the present invention, the co-processed mixture comprises 5 to 49, preferably 5 to 45, preferably 10 to 40, preferably 15 to 35 and preferably 20 to 30 weight-% of the at least one rice carbohydrate-containing composition (each based on dry weight).

Food products of the present invention and food containing said products can be used to provide a fibrous, high quality meat analogue similar to chicken or other meats of animal origin in appearance and mouthfeel. Thus, the presently provided food products are particularly useful as meat extenders or meat analogues. The food products and the food of the present invention can be further processed into refrigerated, frozen, canned, ready-to-eat, hydrated, dehydrated and fried protein food. The present co-processed food products, in particular meat analogues and extenders, and the present food containing said food products, in particular meat extender or analogue, have a blander taste compared to traditional texturized vegetable proteins.

The food product of the present invention is, thus, particularly useful as a partial or total meat replacement in conventional meat-based food, in particular for human or animal consumption. The food product of the present invention may also be used as food filler.

The food product of the present invention comprising the co-processed mixture is a structurized food product, namely is a texturized, also called textured, food product and has a fibrosity, appearance and mouthfeel comparable to a conventional meat product, in particular when hydrated.

The food products of the present invention are characterised by a particularly high protein content. In contrast to food products comprising merely gluten as a protein source, such as 100 % gluten, or soy protein, it is possible to provide food products with an improved texture. Advantageously and unexpectedly, the products obtained have a particularly favourable taste.

The food products of the present invention are characterised by low rancidity and a low, preferably very low, in particular no off-flavour.

One particularly important aspect of the present invention is that the at least one plant protein-containing composition and the at least one rice carbohydrate-containing composition are co-processed, in particular co-extruded, since the mere mixing of a plant protein-containing composition and at least one rice carbohydrate-containing composition does not provide the advantages of the present invention, in particular of the present food product. Thus, the co-processing step required for providing the present food product not just aims to mix the both components, but in addition provides a firm and well-defined structure, namely a texture, to the obtained food product.

Co-processing as used herein refers to a process step, which uses as educts, hereinafter also termed starting materials, at least one plant protein containing composition and at least one rice carbohydrate composition, which are subjected to conditions to produce a texturized food product, in particular being characterised by a favourable structure, such as a fibrous structure, non-stickiness after hydration and a food rehydration capacity, in particular of 1 : 1.5 to 1 : 4, in particular 1:3 (food product: water, based on weight).

Preferably, co-processing conditions are used, which lead to mixing, hydration, shear, homogenisation, compression, aeration, shaping, expansion and/or fiber formation of the educts used. The present invention requires in a preferred embodiment to use the parameters temperature, pressure and shear force so as to obtain in a co-processing of the educts the desired co-processed mixture, hereinafter also termed texturate.

Thus, preferably the co-processing step required for providing the present food product not only aims to mix both compositions, but in addition provides a firm and well-defined structure, namely a texture, to the obtained food product. In a preferred embodiment, the educts used in the present invention are co-processed, in particular co-extruded, as dry mixtures.

In a preferred embodiment of the present invention, the term 'co-extrusion' means that both compositions, namely the at least one plant protein-containing composition and the at least one rice protein-containing composition, are extruded together and are mixed, in particular intensively mixed, with each other resulting in a product which comprises both compositions in a mixed and extruded state. Particularly preferred embodiments of a co-processing step are co-extruding and drum-drying.

In a preferred embodiment, the co-processing step is a co-extrusion step, preferably, the extrusion is a thermo-plastic extrusion.

Advantageously, a high temperature, a reduced amount of added water, a high mechanical energy input and a high shear can, thus, be employed. Preferably, the presently preferred thermo-plastic extrusion uses a high pressure and a high temperature, such as 120 °C to 180°C, to melt the proteins and carbohydrates into incompatible phases that form a dispersion and contribute to the formation of fibrous structures in the obtained co-processed mixture.

Preferably, the device used for co-processing is an extruder, preferably a single screw or twin screw extruder or any other extruder system known to the skilled person.

A preferred extruder of the present invention is a double barrel, twin-screw extruder.

Preferably, the extruder contains screws assembled from shafts and worm segments, as well as mixing lobe and ring-type shearing elements for extruding plant protein material.

In a furthermore preferred embodiment, a food product according to the above is provided, wherein the co-processed mixture is prepared by
x) providing at least one plant protein-containing composition and at least one rice carbohydrate-containing composition and
y) co-processing the at least one plant protein-containing composition and the at least one rice carbohydrate-containing composition so as to obtain a co-processed mixture, in particular a texturized mixture, of the at least one plant protein-containing composition and the at least one rice carbohydrate-containing composition.

Said co-processed mixture may be used as a food product itself or may be combined with additional agents such as a food additive in a conventional manner.

In preferred embodiment, the at least one plant protein-containing composition and the at least one rice carbohydrate-containing composition are provided in step x) in the amounts given for components A) and B), that means the plant protein-containing composition and the rice carbohydrate-containing composition, optionally adding water to the starting materials to be processed.

Preferably, the at least one plant protein-containing composition and the at least one rice carbohydrate-containing composition are provided in step x) in dry form.

In a preferred embodiment of the present invention, the co-processing performed in step y) uses high temperatures and high pressures and high shear forces so as to obtain a co-processed mixture. In a preferred embodiment the co-processing is a co-extruding. In a preferred embodiment the co-extruding is carried out in an extruder, wherein the temperature of the co-processed mixture at the outlet of the extruder is from 120 to 180 °C, preferably 130 to 170 °C, most preferably 140 to 165 °C.

In a furthermore preferred embodiment, the pressure in the extruder is from 10 to 700, preferably 10 to 300, preferably 30 to 95, preferably 50 to 80 and most preferably 60 to 75 bar.

In a furthermore preferred embodiment, the total extrusion throughput (that means plant-protein- and rice carbohydrate compositions and optionally water) applied in the co-extrusion apparatus is from 40 to 1000, preferably 100 to 1000, preferably 500 to 900, preferably 550 to 850, preferably 40 to 700, preferably 40 to 100 kg/h, preferably 50 to 90 kg/h, in particular 80 kg/h.

In a furthermore preferred embodiment of the present invention, water is added in the co-extrusion process at a rate of 3 to 40, in particular 9.5 to 39, in particular 9.5 to 20, in particular 10 to 15, preferably 12 kg water/h.

In a furthermore preferred embodiment of the present invention, the plant protein-containing composition and the rice carbohydrate-containing composition used as educts to prepare the present food product are used in dry form, in particular in powder form. Preferably, in the presently preferred co-extrusion process, 40 to 1000, preferably 100 to 1000, preferably 500 to 900, preferably 550 to 850, preferably 40 to 700, preferably 40 to 80 kg/h, preferably 50 to 60 kg/h, in particular 70 kg/h powder is co-processed.

In a furthermore preferred embodiment of the present invention, the rotational speed of the extruder screw is from 200 to 1800, preferably 250 to 1500, preferably 300 to 1400, preferably 300 to 500, most preferably 300 rotations per minute.

In a preferred embodiment of the present invention, the food product comprises at least 50, 55, 60, 70, 75, 80, 85, 86, 87, 89, 90, 91, 92, 93, 94, 95, 96, 97, 98 or 99 % of the co-processed mixture (based on dry weight).

In a particularly preferred embodiment, the food product of the present invention essentially consists of the co-processed mixture of the at least one plant protein-containing composition and the at least one rice carbohydrate-containing composition.

In a furthermore preferred embodiment, the food product of the present invention consists of the above identified co-processed mixture of the at least one plant protein-containing composition and the at least one rice carbohydrate-containing composition.

The present invention provides in a particularly preferred embodiment a food product according to the above, wherein the co-processed mixture is a co-extruded mixture, hereinafter also termed extrudate. Thus, in a preferred embodiment, the at least one plant protein-containing composition and the at least one rice carbohydrate-containing composition are co-extruded so as to obtain a co-extruded mixture of the at least one plant protein-containing composition and the at least one rice carbohydrate-containing composition. The obtained co-extruded mixture is, thus, a texturized mixture.

In a preferred embodiment of the present invention, the food product comprising the texturized co-processed mixture, in particular the texturized co-extruded mixture, is a texturized food product.

In the context of the present invention, a plant protein-containing composition is a composition comprising at least one plant protein or a mixture thereof. Preferably, the plant protein-containing composition is a composition comprising more than 50 weight-% plant protein, preferably 51 to 100 weight-%, preferably 51 to 99 weight-%, 55 to 99 weight-%, 60 to 90 weight-% or 90 to 100 weight-% plant protein (weight-% of dry matter). In a particularly preferred embodiment, a plant protein-containing composition has a plant protein content of preferably 51, 55, 60, 70 or 80 to 98 weight-%, preferably 51, 60, 70 or 80 to 97 weight-%, preferably 51, 60, 70 or 80 to 96 weight-%, preferably 51, 55, 60, 65, 70, 75 or 80 to 85, 90, 95, 96, 97, 98 or 99 weight-%, preferably 60 to 90 weight-%, preferably 70 to 80 weight-%, preferably 51 to 60 weight-% or preferably 51 to 70 weight-% plant protein (each based on dry matter of the composition). Most preferably, the plant protein content of the plant protein-containing composition is from 90, 92, 93, 94, 95, 96, 97 or 98 to 99 weight-%, preferably 90 to 98 weight-% (each based on dry matter of the composition).

In a particularly preferred embodiment, the at least one plant protein-containing composition is gluten, preferably wheat gluten, or a soy protein-containing component.

The term "gluten" as used herein refers preferably to a water-insoluble protein fraction obtained from grain flour, preferably wheat flour, after aqueous extraction of non-protein parts and subsequent drying. Gluten is a protein fraction in cereal grain flour, such as wheat, rye or barely, that possesses a high content of protein, in particular gliadin and glutenin, as well as unique structural and adhesive properties.

Preferably, the protein content of gluten is from 65 to 95, preferably 70 to 90, most preferably 75 to 85 %, in particular 80 % based on dry weight-% (protein content measured according to ISO 1871, Kjeldahl, using a conversion factor N*6,25). In a particularly preferred embodiment a gluten in dry form, preferably in particulate form, is used, preferably having a particle size according to which at most 2 % of the particles have a size greater than 0.2 mm, as determined according to DIN 66165, part 2, chapter 7 (mashing sieving). In a particularly preferred embodiment, the gluten has a moisture content from 5 to 10, preferably 6 to 9, in particular 8 %.

In a particularly preferred embodiment, the soy protein-containing component is soy protein isolate, soy flour or soy protein concentrate.

The term "soy protein concentrate" as used herein is a soy material, preferably having a protein content from 65 % to 90 % soy protein on a moisture-free basis. Soy protein concentrate preferably also contains soy cotyledon fiber, preferably from 3.5 % to 20 % soy cotyledon fiber by weight on a moisture-free basis. A soy protein concentrate preferably is formed from soybeans by removing the hull and germ of the soybean, flaking or grinding the cotyledon and removing oil from the flaked or ground cotyledon, and separating the soy protein and soy cotyledon fiber from the soluble carbohydrates of the cotyledon.

The term "soy flour" as used herein, refers to a comminuted form of defatted soybean material, preferably containing less than 1 % oil. Preferably, the particles of said flour have a size less than 150 µm. The soy cake, chips, flakes, meal, or mixture of the materials are comminuted into soy flour using conventional soy grinding processes. Soy flour has preferably a soy protein content of 49 % to 65 % on a moisture-free basis.

The term "soy protein isolate" as used herein is a soy material having preferably a protein content of at least 90 % soy protein on a moisture-free basis. A soy protein isolate preferably is formed from soybeans by removing the hull and germ of the soybean from the cotyledon, flaking or grinding the cotyledon and removing oil from the flaked or ground cotyledon, separating the soy protein and carbohydrates of the cotyledon from the cotyledon fiber and subsequently separating the soy protein from the carbohydrates.

In a preferred embodiment of the present invention, the at least one plant protein-containing composition is a soy protein-containing component, a wheat protein-containing component or a pea protein-containing component. In a particularly preferred embodiment, the at least one plant protein-containing composition is gluten, preferably wheat gluten. In a particularly preferred embodiment of the present invention, the at least one protein-containing composition is a soy protein component. In a particularly preferred embodiment, the at least one plant protein-containing composition is a pea protein-containing component. In a particularly preferred embodiment, the at least one plant protein-containing composition is a wheat protein-containing component.

In a preferred embodiment of the present invention, the at least one plant protein composition is a mixture of a soy protein-containing component and a wheat protein-containing component. In a preferred embodiment of the present invention, the at least one plant-protein containing composition is a mixture of a soy protein-containing component and a pea protein-containing component. In a furthermore preferred embodiment of the present invention, the at least one plant protein-containing composition is a mixture of a wheat protein-containing component and a pea protein-containing component. In a furthermore preferred embodiment of the present invention, the at least one plant protein-contianing composition is a mixture of a soy protein-containing component, a wheat protein-containing component and a pea protein-containing component.

In a particularly preferred embodiment, the at least one plant protein-containing composition comprises at most 45%, at most 40%, at most 35%, at most 30%, at most 25%, at most 20%, at most 15%, at most 10%, at most 5%, at most 4%, at most 3%, at most 2%, preferably at most 1% (based on dry weight of the plant protein-containing composition) rice protein.

In a preferred embodiment of the present invention, rice protein is not the biggest individual protein-contributing ingredient in the plant protein-containing composition, preferably in the co-processed mixture, most preferably in the food product of the present invention.

In a particularly preferred embodiment, the at least one plant protein composition, preferably the co-processed mixture, particularly the food product of the present invention, is free of any rice protein.

In a particularly preferred embodiment, at most 45%, at most 44%, at most 40%, at most 35%, at most 30%, at most 25%, at most 20%, at most 15%, at most 10%, at most 9%, at most 8%, at most 7%, at most 6%, at most 5%, at most 4%, at most 3%, at most 2%, preferably at most 1% (based on dry weight of the total protein in the food product or in the co-processed mixture, respectively) of the total protein in the food product, preferably in the co-processed mixture, is rice protein.

In a particularly preferred embodiment of the present invention, the food product of the present invention, preferably the co-processed mixture of the present invention, comprises 0 to 45%, 0 to 44%, 0 to 40%, 0 to 35%, 0 to 30%, 0 to 25%, 0 to 20%, 0 to 15%, 0 to 10%, 0 to 9%, 0 to 8%, 0 to 7%, 0 to 6%, 0 to 5%, 0 to 4%, 0 to 3%, 0 to 2% and preferably 0 to 1% of rice protein (based on dry weight of food product or of the co-processed mixture, respectively).

In a particularly preferred embodiment of the present invention, the food product of the present invention, preferably the co-processed mixture of the present invention, comprises 5 to 45%, 5 to 40%, 5 to 35%, 5 to 30%, 5 to 25%, 5 to 20%, 5 to 15% and preferably 5 to 10%, of rice protein (based on dry weight of food product or of the co-processed mixture, respectively).

In a particularly preferred embodiment of the present invention, the food product of the present invention, preferably the co-processed mixture of the present invention, comprises 10 to 45%, 10 to 40%, 10 to 35%, 10 to 30%, 10 to 25%, 10 to 20%, and preferably 10 to 15%, of rice protein (based on dry weight of food product or of the co-processed mixture, respectively).

In a particularly preferred embodiment of the present invention, the food product of the present invention, preferably the co-processed mixture of the present invention, comprises 15 to 45%, 15 to 40%, 15 to 35%, 15 to 30%, 15 to 25%, and preferably 15 to 20%, of rice protein (based on dry weight of food product or of the co-processed mixture, respectively).

In a particularly preferred embodiment of the present invention, the food product of the present invention, preferably the co-processed mixture of the present invention, comprises 20 to 45%, 20 to 40%, 20 to 35%, 20 to 30%, and preferably 20 to 25% of rice protein (based on dry weight of food product or of the co-processed mixture, respectively).

In a particularly preferred embodiment of the present invention, the food product of the present invention, preferably the co-processed mixture of the present invention, comprises 1 to 45%, 1 to 44%, 1 to 40%, 1 to 35%, 1 to 30%, 1 to 25%, 1 to 20%, 1 to 15%, 1 to 10%, 1 to 9%, 1 to 8%, 1 to 7%, 1 to 6%, 1 to 5%, 1 to 4%, 1 to 3%, and preferably 1 to 2% of rice protein (based on dry weight of food product or of the co-processed mixture, respectively).

In a particularly preferred embodiment of the present invention, the food product of the present invention is free of any rice protein.

In a particularly preferred embodiment of the present invention, the food product, preferably the co-processed mixture, of the present invention comprises at most 45%, at most 40%, at most 35%, at most 30%, at most 25%, at most 20%, at most 15%, at most 10%, at most 9%, at most 8%, at most 7%, at most 6%, at most 5%, at most 4%, at most 3%, at most 2% and preferably at most 1% of rice protein (based on dry weight of food product or of the co-processed mixture, respectively).

In the context of the present invention, a rice carbohydrate-containing composition is a composition comprising at least one rice carbohydrate or a mixture thereof. Preferably, the rice carbohydrate-containing composition is a composition comprising at least 50 weight-%, preferably more than 50 weight-% rice carbohydrate, preferably 51 to 100 weight-%, preferably 51 to 99 weight-%, 55 to 99 weight-%, 60 to 90 weight-% or 90 to 100 weight-% rice carbohydrate (weight-% of dry matter). In a particularly preferred embodiment, a rice carbohydrate-containing composition has a rice carbohydrate content of preferably 51, 55, 60, 70 or 80 to 98 weight-%, preferably 50, 60, 70 or 80 to 97 weight-%, preferably 51, 60, 70 or 80 to 96 weight-%, preferably 51, 55, 60, 70 or 80 to 95, 96, 97, 98 or 99 weight-%, preferably 60 to 90 weight-%, preferably 70 to 80 weight-%, preferably 51 to 60 weight-% or preferably 51 to 70 weight-% rice carbohydrate (each based on dry matter of the composition). Most preferably, the rice carbohydrate content of the rice carbohydrate-containing composition is from 90, 92, 93, 94, 95, 96, 97 or 98 to 99 weight-%, preferably 90 to 98 weight-% (each based on dry matter of composition).

In a particularly preferred embodiment of the present invention, the rice carbohydrate-containing composition is rice starch, rice flour or rice bran.

In a particularly preferred embodiment, the co-processed mixture contains 4 to 15, 4 to 12, preferably 5 to 15, preferably 4 to 10, preferably 5 to 10 weight-% water (based on total weight), determined immediately after the co-processing.

In a preferred embodiment of the present invention, the co-processed mixture, determined immediately after the co-processing, has a water content of at most 10 wt.-%, preferably at most 8 wt.-%, most preferably at most 6 wt.-% (based on total weight of the co-processed mixture). In a preferred embodiment of the present invention, the co-processed mixture has a water content from 0 to 10, preferably 0 to 9, preferably 0 to 8, preferably 0 to 7, preferably 1 to 6, preferably 2 to 6, preferably 2 to 5.9, preferably 2.5 to 5.9, preferably 3 to 5.8, most preferably 4 to 5.7 wt.-%, preferably 1 to 10, preferably 1 to 9, preferably 1 to 8, preferably 1 to 7, preferably 1 to 6.5, preferably 1 to 5.9, preferably 1 to 5.8, preferably 1 to 5.7, preferably 1 to 5.6, most preferably 2 to 10, preferably 2 to 9, preferably 2 to 8, preferably 2 to 7, preferably 2 to 6.5, preferably 2 to 5.9, preferably 2 to 5.8, preferably 2 to 5.7, in particular 3 to 10%, preferably 3 to 9%, preferably 3 to 8%, 3 to 7%, preferably 3 to 6%, preferably 4 to 10%, preferably 4 to 9%, preferably 4 to 8%, preferably 4 to 7%, preferably 4 to 6%, preferably 5 to 10%, preferably 5 to 9%, preferably 5 to 8%, preferably 5 to 7%, preferably 5 to 6%, preferably 5.4% or 5.5% of water (each based on total weight of the co-processed mixture).

According to the present invention, it was surprisingly found that products having a low water content as identified above, for instance of at most 10 wt.-%, preferably at most 8 wt.-%, preferably at most 6 wt.-%, preferably at most 5.8%, had an exceptionally high stability such that they survive typical meal preparing operations such as mixing and cutting in a much better way than comparable products. Further, the products of the present invention having such a low water content have a lighter color than comparable products suggesting the absence of undesirable degradation.

In a preferred embodiment of the present invention, the co-processed mixture, the food product or the food of the present invention comprises at least one food additive. Such a food additive may be a taste modulating agent, a nutrient, pH adjusting agent, a preservative, a thickening agent or a colour.

In a particularly preferred embodiment, the co-processed mixture, the food product or the food contains 0.1 to 5 weight-% (based on dry weight) of at least one taste modulating agent.

In a particularly preferred embodiment, the taste modulating agent is a flavour, a sweetener or a salt.

In a particularly preferred embodiment, the flavour is an animal meat flavour, an animal meat oil, spice extracts, spice oils, natural smoke solutions, natural smoke extracts, yeast extract, and shiitake extract. Additional flavours may include onion flavour, garlic flavour, or herb flavours. The animal meat composition may further comprise a flavour enhancer. Examples of flavour enhancers that may be used include salt, for instance sodium chloride, glutamic acid salts, for instance monosodium glutamate, glycine salts, guanylic acid salts, inosinic acid salts, 5'-ribonucleotide salts, hydrolyzed proteins, and hydrolyzed vegetable proteins.

In a particularly preferred embodiment, the salt is a sodium salt, magnesium salt or calcium salt, in particular selected from the group consisting of calcium carbonate, calcium chloride, calcium gluconate, calcium lactate and combinations thereof.

In a particularly preferred embodiment, the sweetener is a high intensity sweetener, a sugar or a sugar replacement, such as a sugar alcohol.

In the context of the present invention, the term "sweetener" refers to a substance providing sweetness to a consumer, in particular a human consumer. Such a "sweetener" may be a bulk sweetener, which provides a feeling of body and sweetness to the consumer, wherein the feeling of body refers to the sensation of a particular texture and physical presence of said sweetener in the mouth of the consumer. A bulk sweetener according to the present invention may be a polyol, in particular a sugar alcohol, preferably a disaccharide alcohol, preferably isomalt.

Alternatively, a "sweetener" may also be an intensive sweetener, which solely provides sweetness, but does not provide a feeling of body to the consumer. Intensive sweeteners are used, due to their high sweetening power, in tiny amounts.

In the context of the present invention, the terms "component, which provides sweetness" or "sweetening component" are meaning a "sweetener".

In a preferred embodiment of the present invention, the high intensity sweetener is aspartame, acesulfame K, sucralose, saccharine, glycyrrhicine, thaumatin, neohesperidin-dihydrochalkone, cyclamate, a stevia extract, steviol glycoside, stevioside, rebaudioside A, monellin, alitame or a combination thereof.

In a particularly preferred embodiment the sugar alcohol is isomalt, mannitol, sorbitol, xylitol, lactitol, erythritol or maltitol.

In the context of the present invention, the term "isomalt" preferably means isomalt ST, isomalt GS, an isomalt variant or a component thereof. A specific embodiment of isomalt is also known as palatinit® or "hydrogenated palatinose".

In a particularly preferred embodiment the sugar is sucrose, glucose, fructose, lactose, maltose, invert sugar, isomaltulose or trehalulose.

In a further embodiment, the food or food product or co-processed mixture of the present invention may further comprise a thickening or a gelling agent, such as alginic acid and its salts, agar, carrageenan and its salts, processed Eucheuma seaweed, gums, for instance carob bean, guar, tragacanth or xanthan, pectins, sodium carboxymethylcellulose or modified starches.

In a further embodiment, the food or food product or co-processed mixture of the present invention may further comprise a nutrient such as a vitamin, a mineral, an antioxidant, an omega-3 fatty acid, or an herb. Suitable vitamins include vitamins A, C and E, which are also antioxidants, and vitamins B and D. Examples of minerals that may be added include the salts of aluminium, ammonium, calcium, magnesium, and potassium. Suitable omega-3 fatty acids include docosahexaenoic acid (DHA). Herbs that may be added include basil, celery leaves, chervil, chives, cilantro, parsley, oregano, tarragon, and thyme.

In a furthermore preferred embodiment of the present invention, the food or food product or co-processed mixture may contain a pH-adjusting agent.

In a preferred embodiment of the present invention, the co-processed mixture is co-processed, in particular co-extruded, into rods, tubes, chunks, flakes, grains, nuggets or strips.

In a particularly preferred embodiment, the present invention further relates to a process for preparing a food product, in particular a food product of the present invention, comprising the following process steps
x) providing at least one plant protein-containing composition and at least one rice carbohydrate-containing composition,
y) co-processing the at least one plant protein-containing composition and the at least one rice carbohydrate-containing composition so as to obtain a co-processed mixture, in particular a texturized mixture, of the at least one plant protein-containing composition and the at least one rice carbohydrate-containing composition.

Said co-processed mixture may be used as a food product itself or may be combined with additional agents such as a food additive in a conventional manner.In a preferred embodiment, said process for preparing a food is a process for preparing a food with an improved taste, in particular a reduced or eliminated bitter taste, in particular a reduced or eliminated off-taste, preferably of a gluten-rich composition, preferably gluten, or of a soy protein-containing component.

In a particularly preferred embodiment of the present process, the co-processing of the at least one plant protein source and the at least one rice carbohydrate-containing composition is a co-extruding.

Preferably, the at least one plant protein-containing composition and the at least one rice carbohydrate-containing composition as provided in step x) are provided in dry form, preferably in powder form.

In a preferred embodiment of the present process, the co-processing performed in step y) uses high temperatures and high pressures and high shear forces so as to obtain a co-processed mixture. In a preferred embodiment of the present process the co-extruding is carried out in an extruder, wherein the temperature of the co-processed mixture at the outlet of the extruder is from 120 to 180 °C, preferably 130 to 170 °C, most preferably 140 to 165 °C.

In a furthermore preferred embodiment of the present process, the pressure in the extruder is from 30 to 95, preferably 50 to 80 and most preferably 60 to 75 bar.

In one particularly preferred embodiment of the present invention, water is added at the beginning or during the co-processing step.

In a preferred embodiment of the present invention, at the co-processing step b), preferably at the beginning thereof, water is added (based on total weight of the starting materials, that means educts used in the co-processing process of the present invention).

In a preferred embodiment of the present invention, water is added to the co-processed mixture in an amount of 4 to 15, preferably 4 to 12, preferably 5 to 15, preferably 5 to 10, preferably 4 to 10, preferably at most 10 wt.-%, preferably at most 8 wt.-%, most preferably at most 6 wt.-%, preferably at most 5.8 wt.-% (based on total weight of the co-processed mixture). In a preferred embodiment of the present invention, water is added to the co-processed mixture in an amount from 0 to 10, preferably 0 to 9, preferably 0 to 8, preferably 0 to 7, preferably 1 to 6, preferably 2 to 6, preferably 2 to 5.9, preferably 2.5 to 5.9, preferably 3 to 5.8, most preferably 4 to 5.7 wt.-%, preferably 1 to 10, preferably 1 to 9, preferably 1 to 8, preferably 1 to 7, preferably 1 to 6.5, preferably 1 to 5.9, preferably 1 to 5.8, preferably 1 to 5.7, preferably 1 to 5.6, most preferably 2 to 10, preferably 2 to 9, preferably 2 to 8, preferably 2 to 7, preferably 2 to 6.5, preferably 2 to 5.9, preferably 2 to 5.8, preferably 2 to 5.7, in particular 3 to 10%, preferably 3 to 9%, preferably 3 to 8%, 3 to 7%, preferably 3 to 6%, preferably 4 to 10%, preferably 4 to 9%, preferably 4 to 8%, preferably 4 to 7%, preferably 4 to 6%, preferably 5 to 10%, preferably 5 to 9%, preferably 5 to 8%, preferably 5 to 7%, preferably 5 to 6%, preferably 5.4% or 5.5% of water (each based on total weight of the co-processed mixture).

In a furthermore preferred embodiment of the present process, the rotational speed of the extruder screw is from 200 to 1800, preferably 250 to 1500, preferably 300 to 1400, preferably 300 to 500, most preferably 300 rotations per minute.

In a preferred embodiment of the present co-processing, preferably co-extrusion, process the starting materials (also called educts), preferably used in powder form, are co-processed in an amount of 40 to 100 kg/h, preferably 40 to 80 kg/h, in particular 50 to 60 kg/h, preferably 60 to 75 kg/h, preferably 70 kg/h. In a furthermore preferred embodiment of the present co-processing, preferably co-extrusion process, 9.5 to 20 kg/h, in particular 10 to 15 kg/h, preferably 12 kg/h water is added into the process. In a furthermore preferred embodiment of the present invention, the total throughput in the presently preferred co-processing, preferably co-extrusion process is from 50 to 100 kg/h, preferably 50 to 80 kg/h.

In a furthermore preferred embodiment of the present invention, the pressure, which results from the process and apparatus parameters obtained in the extruder is from 2 to 95, preferably 50 to 80 and in particular 60 to 75 bars.

A preferred extrusion process for the preparation of the present food product comprises introducing the plant protein-containing composition, the rice carbohydrate-containing composition and optional other ingredients such as flavour or salt into a mixing tank, i.e. an ingredient blender, to combine the ingredients and form a pre-mix, i.e. the plant protein- and the rice carbohydrate-containing components A) and B) before having been extruded, preferably a dry pre-mix.

In preferred embodiments a pH-lowering agent may be mixed with water to be injected into the extruder. The, preferably dry blended, pre-mix is then transferred to a hopper from which the, preferably dry blended, ingredients are fed to an extruder in which the dry ingredients and injected water are mixed and heated under mechanical pressure generated by the screws of the extruder to form a molten extrusion mass. The molten extrusion mass exits the extruder through an extrusion die.

The screws of a twin-screw extruder can rotate within the barrel in the same or opposite directions. Rotation of the screws in the same direction is referred to as single flow or co-rotating whereas rotation of the screws in opposite directions is referred to as double flow or counter-rotating. The speed of the screw or screws of the extruder may vary depending on the particular apparatus. In one preferred embodiment the speed can be from about 100 to about 450 rotations per minute (rpm), preferably 300 rpm.

The extruder in a preferred embodiment comprises a plurality of heating zones through which the present protein/carbohydrate mixture A) and B) is conveyed under mechanical pressure prior to exiting the extruder through an extrusion die. The temperature in each successive heating zone generally exceeds the temperature of the previous heating zone by about 10 °C to about 70 °C. In one embodiment, a dry or wet premix or the components A) and B) are fed into and transferred through 7 to 11, preferably 10 heating zones within the extruder with the protein carbohydrate mixture heated to a temperature of from about 25 °C to about 130 to 170 °C such that the molten extrusion mass enters the extrusion die at a temperature of from about 130 to 170 °C. In one embodiment, the protein/carbohydrate mixture A) and B) is heated in the respective heating zones to temperatures of about 25, about 40, about 60, about 80, about 130, about 170, about 170, about 170, about 170 and about 170 °C. One skilled in the art may adjust the temperatures in one or more zones to achieve the desired properties.

The pressure within the extruder barrel is preferably from 2 to 35 bar, or more specifically from 3 to 20 bar. The barrel pressure is dependent on numerous factors including, for example, the extruder screw speed, feed rate of the mixture to the barrel, feed rate of water to the barrel, and the viscosity of the molten mass within the barrel.

In a preferred embodiment, water is injected into the extruder barrel to the plant protein carbohydrate mixture A) and B) and thereby promotes texturization of the proteins. As an aid in forming the molten extrusion mass, the water may act as a plasticizing agent. Water may be introduced to the extruder barrel via one or more injection jets. The rate of introduction of water to the can be controlled to promote production of an extrudate, i.e. the present co-processed mixture, having the aforementioned desired characteristics.

In a preferred embodiment, the co-processed mixture has a water content from 4 to 15, preferably 4 to 12, preferably 5 to 15, preferably 5 to 10, preferably 4 to 10% (weight-%), determined immediately after co-processing.

In a preferred embodiment of the present invention, the co-processed mixture obtained immediately after co-processing has a water content of at most 10 wt.-%, preferably at most 8 wt.-%, most preferably at most 6 wt.-% (based on total weight of the co-processed mixture). In a preferred embodiment of the present invention, the co-processed mixture obtained immediately after processing has a water content from 0 to 10, preferably 0 to 9, preferably 0 to 8, preferably 0 to 7, preferably 1 to 6, preferably 2 to 6, preferably 2 to 5.9, preferably 2.5 to 5.9, preferably 3 to 5.8, most preferably 4 to 5.7 wt.-%, preferably 1 to 10, preferably 1 to 9, preferably 1 to 8, preferably 1 to 7, preferably 1 to 6.5, preferably 1 to 5.9, preferably 1 to 5.8, preferably 1 to 5.7, preferably 1 to 5.6, most preferably 2 to 10, preferably 2 to 9, preferably 2 to 8, preferably 2 to 7, preferably 2 to 6.5, preferably 2 to 5.9, preferably 2 to 5.8, preferably 2 to 5.7, in particular 3 to 10%, preferably 3 to 9%, preferably 3 to 8%, 3 to 7%, preferably 3 to 6%, preferably 4 to 10%, preferably 4 to 9%, preferably 4 to 8%, preferably 4 to 7%, preferably 4 to 6%, preferably 5 to 10%, preferably 5 to 9%, preferably 5 to 8%, preferably 5 to 7%, preferably 5 to 6%, preferably 5.4% or 5.5% of water (each based on total weight of the co-processed mixture).

In the present invention, it was surprisingly found that the use of the rice carbohydrate containing composition, in particular, a rice flour, rice starch or rice bran, in a particularly preferred embodiment enables processing of components A) and B) at low moisture percentages. It was expected in the prior art that working with low moisture percentages below 10 wt.-% the mixture would lead to blockage of the extruder and to burning of the product. According to the present invention, it was surprisingly found that no blockage was observed and the product was not burned at all. In fact, the color obtained was lighter than that of comparable products suggesting the absence of undesirable degradation.

The preferably employed pre-mixer preferably contains one or more paddles to promote uniform mixing of the plant protein- and rice carbohydrate-containing compositions and other ingredients. The configuration and rotational speed of the paddles can vary, depending on the capacity of the pre-mixer. The pre-mix is fed preferably into an extruder to heat, shear, and ultimately plasticize the mixture.

Components A) and B) are, thus, subjected to shear and pressure by the extruder to plasticize the mixture. The screw elements of the extruder shear the mixture as well as create pressure in the extruder by forcing the mixture forwards through the extruder and through the die. The screw motor speed is in a preferred embodiment set to a speed of about 100 rpm to about 1800 rpm, preferably 200 to 1800 rpm, preferably 200 to 500 rpm. In one embodiment, the screw motor speed is about 300 to 500 rpm, preferably 100 rpm to about 400 rpm. In another embodiment, the screw motor speed is set at about 300 rpm.

Preferably, the extruder controls the temperature of the mixture as it passes through the extruder denaturing the protein in the mixture. Preferably, the extruder includes a means for controlling the temperature of the mixture such as extruder barrel jackets into which heating or cooling media such as steam or chilled water may be introduced to control the temperature of the mixture passing through the extruder. Preferably, the extruder may also include steam injection ports for directly injecting steam into the mixture within the extruder. In one embodiment, the extruder includes multiple heating zones that can be controlled to independent temperatures, where the temperatures of the heating zones are set to control the temperature of the mixture as it proceeds through the extruder. For example, the extruder may be set in a ten temperature zone arrangement, where the first zone (adjacent the extruder inlet port) is set to a temperature of about 20 °C to about 30 °C, the second zone is set to a temperature of about 30 °C to about 50 °C, the third zone is set to a temperature of 55 °C to about 75 °C, the fourth zone is set to a temperature of about 80 °C to about 90 °C, the fifth zone is set to a temperature of about 120 °C to about 170 °C and the sixth up to the tenth zone is set to a temperature of about 160 °C to 170 °C (adjacent the extruder exit port).

In a preferred embodiment, the temperature zone arrangement requires that in a first zone the temperature is set to 30 °C to 50 °C, in a second zone to 55 °C to 65 °C, in a third zone to 70 °C to 90 °C, in a fourth zone to 120 °C to 140 °C and in a fifth zone to 160 °C to 180 °C. In a further embodiment, the temperature zone arrangement is as given in table 1 of the present teaching.

The mixture forms a melted plasticized mass in the extruder. Preferably, a die assembly is attached to the extruder in an arrangement that permits the plasticized mixture to flow from the extruder exit port into a long cooling die. Additionally, the cooling die produces substantial alignment of the protein fibers within the plasticized mixture as it flows through the die. The width and height dimensions of the cooling die are selected and set prior to extrusion of the mixture to provide the fibrous material extrudate with the desired dimensions. The width of the die aperture(s) may be set so that the extrudate resembles from a cubic chunk of meat to a steak filet, where widening the width of the die aperture(s) decreases the cubic chunk-like nature of the extrudate and increases the filet-like nature of the extrudate. In one embodiment, the width of the die aperture(s) is/are set to a width of from about 20 millimeters to about 120 millimeters, or more specifically about 60-80 millimeters. The height dimension of the die aperture(s) may be set to provide the desired thickness of the extrudate. The height of the aperture(s) may be set to provide a very thin extrudate or a thick extrudate. The height of the die aperture(s) may be set to from about 1 millimeter to about 25 millimeters, and more specifically from about 5 millimeters to about 15 millimeters. It is also contemplated that the die aperture(s) may be round. The diameter of the die aperture(s) may be set to provide the desired thickness of the extrudate. The diameter of the aperture(s) may be set to provide a very thin extrudate or a thick extrudate. The diameter of the die aperture(s) may be set to from about 1 millimeter to about 30 millimeters, and more specifically from about 3 millimeters to about 16 millimeters. The length of the die may be from about 200 to about 500 millimeters, even more specifically from about 300 to about 400 millimeters. Chilled water e.g., from about 2 to about 8 °C may be used as the cooling medium and circulated through the cooling die.

The extrudate preferably can be cut after exiting the cooling die.

A dryer may optionally be used to dry the extrudate. The dryer, if one is used, generally comprises one or more drying zones. The extrudate will be present in the dryer for a time sufficient to produce an extrudate having the desired moisture content. Thus, the temperature of the air is not important, if a lower temperature is used longer drying times will be required than if a higher temperature is used.

The extrudates, that means the co-processed mixture produced in accordance with the present invention, comprise preferably protein fibers that are substantially aligned, preferably after hydration. As used herein, "substantially aligned" generally refers to the arrangement of protein fibers such that a significantly high percentage of the protein fibers of the structured plant protein product are contiguous to each other at less than approximately a 45° angle when viewed in a horizontal plane. Typically, an average of at least about 55 % of the protein fibers comprising the structured plant protein product are substantially aligned. In another embodiment, an average of at least about 60 % of the protein fibers are substantially aligned. In a further embodiment, an average of at least about 70 % of the protein fibers are substantially aligned. In an additional embodiment, an average of at least about 80 % of the protein fibers are substantially aligned. In yet another embodiment, an average of at least 90 % of the protein fibers are substantially aligned. Methods for determining the degree of protein fiber alignment are known in the art and include visual determinations based upon photographs and micrographic images.

In addition to having protein fibers that are substantially aligned, the structured plant protein products preferably have an average Warner-Bratzler shear force that is substantially similar to that of whole meat muscle.

In a particularly preferred embodiment, the process of the present invention is characterised by a subsequent process step z), wherein the co-processed mixture obtained in process step y) is dried.

In a preferred embodiment of the present invention the food product obtained in step y) or z) is hydrated, preferably re-hydrated. Such a food product is a hydrated food product.

In a furthermore preferred embodiment of the present invention, the co-processed mixture after an optional hydration step comprises 55 to 85 %, preferably 60 to 80 %, preferably 70 to 80 weight-% water. Said food product is herein also called a hydrated food product.

In a furthermore preferred embodiment the food product or co-processed mixture of the present invention, in particular obtained in step y) or the dried food product obtained in step z) is milled, preferably after hydration or preferably before hydration or preferably without any hydration.

Preferably, the food product is milled to obtain a fine powder.

In a furthermore preferred embodiment, the food product or co-processed mixture of the present invention, in particular obtained in step y), or the dried food product obtained in step c) is crushed, preferably after hydration or preferably before hydration or preferably without any hydration.

In a preferred embodiment of the present invention, the food product or co-processed mixture of the present invention, in particular obtained in step y), or the dried food product obtained in step z) is flaked. The flaked product of the present invention has the additional advantage that visually it still has a fibrous and meat-like appearance.

The present invention also provides a food product, which is obtained according to any one of the processes according to the present invention.

The present invention further provides a food comprising meat and the food product according to the present invention. In a preferred embodiment, a food comprising meat and the food product of the present invention is provided, wherein the ratio of the meat to the food product is from 45 to 99 parts of the meat, in particular 55 to 95 parts of the meat, in particular 60 to 95 parts of the meat, preferably 70 to 90 parts of the meat to 55 to 1 parts of the food product, in particular 45 to 5 parts of the food product, in particular 40 to 5 parts of the food product, preferably 30 to 10 parts of the food product (based on total weight of meat and the food product present in the food). In this embodiment of the present invention, the food product of the present invention is used as partial meat replacement, that means as a meat extender.

In a preferred embodiment of the present invention, 10 to 80 % meat in a conventional food is replaced by a corresponding volume of a food product, in particular hydrated food product, of the present invention. Preferably, 25 to 55, most preferably 30 to 50 % meat is replaced by the corresponding volume of food product, in particular volume of hydrated food product of the present invention.

In a preferred embodiment of the present invention, 30 to 80, preferably 40 to 55, most preferably 50 % of a meat in a conventional meat based product, preferably a burger, is replaced by the corresponding volume of the food product of the present invention, preferably in hydrated form.

In a preferred embodiment of the present invention, 5 to 40 %, in particular 10 to 30 %, preferably 10 %, most preferably 30 % of a meat in a conventional meat based product, preferably an emulsified product, is replaced by the corresponding volume of the food product of the present invention, preferably in hydrated form.

In a furthermore preferred embodiment, there is provided a food comprising the food product according to the present invention and at least one food additive, wherein said food does not contain meat. Thus, in this preferred embodiment, the food product of the present invention is used as a total meat replacement, that means as a meat analogue.

In a furthermore preferred embodiment, there is provided a food comprising at least one food additive and the food product according to the invention, wherein said food product according to the present invention is used as a filler.

The present food product may be processed into a variety of foods for either human or animal consumption. By way of non-limiting example, the food of the present invention may be an animal meat composition for animal or human consumption, preferably a food that simulates a ground meat product, a steak product, a sirloin tip product, a kebab product, a shredded product, a chunk meat product, or a nugget product. In a furthermore preferred embodiment the food according to the present invention is a burger, a sausage, a burrito, chili con carne, spaghetti bolognese, sloppy joe or tacos. The foods of the present invention may be placed in a tray with overwrap, vacuum packed, retort canned or pouched, or frozen.

In a furthermore preferred embodiment, the present invention provides the use of a rice carbohydrate-containing composition as described herein to provide an improved taste, in particular reduce or eliminate a bitter taste, in particular reduce or eliminate an off-taste of a gluten-rich composition, preferably gluten, in particular wheat gluten.

In a furthermore preferred embodiment, the present invention provides the use of a rice carbohydrate-containing composition as described herein to provide an improved taste, in particular reduce or eliminate a bitter taste, in particular reduce or eliminate an off-taste of a soy protein-containing component, in particular soy flour, soy protein isolate or soy concentrate.

The present invention also provides a process for improving the taste, in particular for reducing or eliminating off-taste, in particular reducing or eliminate a bitter taste of gluten or a gluten-rich composition or a soy protein-containing composition, wherein at least one rice carbohydrate-containing composition as described herein is added to the gluten, gluten-containing composition or soy protein-containing composition.

In the context of the present invention, the term "comprising" preferably has the meaning of "containing" or "including" meaning that the composition in question at least comprises the specifically identified component without excluding the presence of further components. However, in a preferred embodiment the term comprising is also understood to have the meaning of "consisting essentially of" and in a most preferred embodiment of "consisting". The term "consisting essentially of" excludes the presence of substantial amounts of further components except the specifically identified component of the composition. The term "consisting" excludes the presence of any further compound, no matter in which quantity in the composition identified.

In the context of the present invention, the term "comprising essentially" preferably has the meaning that the specifically identified component is the component with the highest proportion in the composition in question compared to the components present in the composition in question. However, in a preferred embodiment the term "comprising essentially" means that the composition in question comprises at least 50 % by weight, even more preferably at least 51 % by weight of the specifically identified component.

In the context of the present invention, the term "at least one" preferably has the meaning that one component or more than one components, for example two, three or more components are present.

In the present teaching, reference to percent (%) is a reference to weight-%, unless otherwise specified. In the context of the present invention, all amounts, in particular relative amounts of components of a composition, do not exceed 100 %, preferably add up to 100 % based either on the dry matter of the composition or the overall weight of the composition, as indicated.

In the context of the present invention, protein concentrations and protein contents are determined according to ISO 1871, Kjeldahl, using a conversion factor N*6,25, if not otherwise stated.

Further preferred embodiments of the present invention are the subject matter of the subclaims.

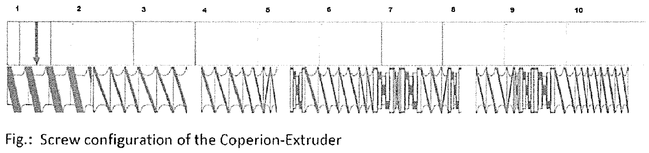

The present invention will now be exemplified by way of specific examples and the accompanying figure.

### The figure shows:

The figure shows the screw configuration of the extruder used in the example.

### Example 1:

### 1. Recipes and Preparation:

### 1.1 In the following example various compositions of plant material with the following designations have been used:

P18: 80 % wheat gluten (Beneo, VWG 75, 75 % protein, i.e. gluten) and 20 % wheat meal (each in weight-% on dry weight) in form of a co-processed texturate.

P27: 80 % wheat gluten (Beneo) and 20 % rice flour (each in weight-% on dry weight) in form of a co -processed texturate.

P31: 80 % wheat gluten (Beneo) and 20 % rice bran (Remylive 200) (each in weight-% on dry weight) inform of a co-processed texturate.

P32: 80 % wheat gluten (Beneo), 10 % rice flour and 10% rice bran (Remylive 200) (each in weight-% on dry weight) in form of a co-processed texturate.

PS: 100 weight-% (dry weight) soy protein (texturate)

PSR: 85 weight-% soy protein and 15 weight-% rice flour (dry weight) in form of a coprocessedtexturate.

PSW: 50 weight-% soy protein and 50 weight-% wheat meal (dry weight) in form of a co-processed texturate.

PSWR: 35 weight-% soy protein, 50 weight-% wheat meal and
15 weight-% rice flour (dry weight) in form of a co-processed
texturate.

Further, 100 % gluten (untextured) and 80 weight-% gluten mixed with 20 weight-% rice flour in untexturized form have been used (each based on dry matter).

### 1.2 Using the plant material identified in section 1.1 above various foods have been prepared.

P18, P27, P31, P32, PS, PSR, PSW and PSWR are subjected to an extrusion process as identified below, so as to obtain from the educts, namely wheat gluten, wheat meal, soy flour, soy protein, rice flour and rice bran, co-extruded texturates using the process parameters as set forth in section 1.3 below.

### 1.3 Extrusion process parameters:

An extruder Coperion ZSK 43 MV, which is a co-rotating twin-screw extruder, has been used with a rotational speed of 300 rpm. The extruder has a high screw volume due to a low cut screw. The extruder has a length of 1600 mm and an outlet die with 12 holes a 4 mm of which 10 were closed. Further, after the die a granulator with 4 cutters with a rotational speed of 300-3000 rpm has been employed. The screw configuration of the extruder is given in the figure and the extrusion process parameters in table 1.

**Table 1:**

| Temp. | Parameter | P18 | P27 | P 31 | P32 |
|---|---|---|---|---|---|
| 1 | | 40 | 40 | 40 | 40 |
| 2 | | 60 | 60 | 60 | 60 |
| 3 | | 80 | 80 | 80 | 80 |
| 4 | | 130 | 130 | 130 | 130 |
| 5 | | 170 | 170 | 170 | 170 |
| 6 | | 170 | 170 | 170 | 170 |
| 7 | | 170 | 170 | 170 | 170 |
| 8 | | 170 | 170 | 170 | 170 |
| 9 | | 170 | 170 | 170 | 170 |
| 10 | | 160 | 170 | 170 | 170 |
| | temperature product | 165 | 132 | 156 | 157 |
| | process pressure (bar) resulting from process and apparatus parameters | 65 | 61 | 66 | 73 |
| | speed 1/min | 300 | 300 | 300 | 300 |
| | throughput drymix /kg/h | 70 | 70 | 70 | 70 |
| | throughput water/kg/h | 12 | 12 | 12 | 12 |
| | die (2 open holes) | 4 mm | 4 mm | 4 mm | 4 mm |
| | | 2 holes | 2 holes | 2 holes | 2 holes |

| | | | | | |
|---|---|---|---|---|---|
| Legend: Temp.: Temperature in temperature zones as given in the figure; temperature product measured at extruder outlet. | | | | | |

### 1.4 Preparation of food:

In the following, the plant materials identified in section 1.1 and extruded according to section 1.3 are used as meat extenders so as to replace 10 and 30 % of meat in a conventional sausage recipe (control).

The co-extruded texturates employed have - prior to use in the recipe of table 2 below - been milled and hydrated (1:3 ratio of texturates to water).

Milling has been done with an Ultraplex Universalmühle B 160 UPZ mit Stiftscheibe, Drehzahl (rotating speed) 14285 U/min with 1 run.

The protein content of the milled and hydrated texturates was approximately 64 %, of the chicken meat 20 % (70 % water) and of the cover fat 8 % (20 % water).

Accordingly, mechanically deboned chicken is provided in a cutter, NPS (nitrite curing salt)_and half of the other ingredients as identified in the following table 2 are added, then the remaining ingredients are added. The obtained composition is cuttered under vacuum with a cutter-end temperature of 6 to 8 °C. Subsequently, the composition is refined for 30 to 45 minutes at 50 °C, the sausages were dried and smoked for 10 minutes. The smoke is evacuated and the sausages are dried again for 10 minutes, cured again for 10 minutes at 55 °C and refined at a temperature of 78 °C to a core temperature of 72 °C. Afterwards, they are showered in intervals and quickly cooled to less than 4 °C. Subsequently, they are heated in vacuum packages for 15 minutes at 80 °C.

**Table 2: Recipes of test food**

| | control | | 10 % exchange | | | | | 30 % exchange | | | |
|---|---|---|---|---|---|---|---|---|---|---|---|
| plant material | | P18 | P27 | P32 | P18 | P27 | P32 | soy (PS) | soy+ rice flour (PSR) | soy/wheat (PSW) | soy/wheat+ rice flour(PSWR) |
| chicken separator meat (dewed, -1°C) | 45 | | 40,5 | | | | | | 31,5 | | |
| S-coverfat, 3 mm, 2°C | 20 | | 18 | | | | | | 14 | | |
| water | 35 | | 31,5 | | | | | | 24,5 | | |
| texturate, milled, hydrated (1:3) composed of a) and b) | 0 | | 10 | | | | | | 30 | | |
| a) texturate | | | 2,5 | | | | | | 7,5 | | |
| b) water | | | 7,5 | | | | | | 22,5 | | |
| NPS | 1,5 | | | | | | | | | | |
| Frankfurter Combi (spice) | 0,85 | | | | | | | | | | |
| beef protein | 1 | | | | | | | | | | |
| Fermento AC20 (color) | 0,1 | | | | | | | | | | |

### 2. Results:

### 2.1 Taste comparisons were performed within the following test groups.

| | |
|---|---|
| Group 1 (trials 2, 3 and 4) | 10 % meat replacement with textured gluten |
| Group 2 (trials 5, 6 and 7) | 30 % meat replacement with textured gluten |
| Group 3 (trials 8 and 9) | 30 % meat replacement with textured soy |

Such as evident from table 3 below, recipes P27 and P32, which comprise a co-extruded mixture of wheat gluten and at least one rice component have a substantially better taste, namely no off-taste in comparison to product P18, which is a food containing a wheat gluten/wheat meal co-extrudate mixture. Said observation is valid both for a 10 % and a 30 % meat replacement using a composition of the present invention.

It is further evident, that recipe PSR containing a co-extruded mixture comprising a soy protein and rice flour has an improved taste, namely a covered soy note, in comparison to a recipe based on co-extruded soy alone.

**Table 3: Sensorial evaluation I:**

| Trial | plant material | taste (ranking from 1 (best) to 3) | Comment |
|---|---|---|---|
| 1 | none | reference | Reference product 100 % meat |
| 2 | P18 | 3 | slight gluten taste |
| 3 | P27 | 2 | no off-taste |
| 4 | P32 | 1 | no off-taste |
| 5 | P18 | 3 | strong gluten taste |
| 6 | P27 | 2 | no off-taste |
| 7 | P32 | 1 | no off-taste |
| 8 | textured soy (PS) | 2 | slight soy note |
| 9 | soy + rice flour (textured) (PSR) | 1 | soy note covered (i.e. no soy note observed) |

2.2 From table 4 below it is evident, that a recipe based on a 100 % gluten composition used as a 30 % meat replacement leads to a strong off-taste in the food. A slight off-taste is seen in case untexturized gluten from wheat and rice ingredient is used.

In contrast to this, recipes based on P27, P31 and P32, that means co-extruded mixtures comprising a rice component and gluten show no off-taste at all.

**Table 4: Sensorial evaluation II:**

| **Test with 30 % meat replacement** | **taste** |
|---|---|
| textured Gluten standard | strong off-taste |
| Gluten + rice ingredient (textured) | no off-taste |
| Gluten + rice ingredient (untextured) | slight off-taste |

2.3 As evident from table 5 below, a 30 % meat replacement recipe based on P31 and P32 shows no off-taste, while a wheat gluten/wheat meal base recipe (P18) or the use of untextured gluten as a meat replacement or wheat meat cause a strong off-taste and a gluten and rice flour mixture in non-texturized form provoke a slight off-taste.

**Table 5: Sensorial evaluation III:**

| Trial | plant material (30 % meat replacement) | taste |
|---|---|---|
| 11 | | |
| 12 | P18 | strong off-taste |
| 13 | | |
| 14 | | No off-taste, only |
| 15 | P31 | slight rice taste |
| 16 | | |
| 17 | | |
| 18 | P32 | no off-taste |
| 19 | | |
| 20 | Gluten (untextured) | strong off-taste |
| 21 | Gluten + rice flour 80:20 (non-textured) | slight off-taste |
| 22 | Wheatmeat Kampffmeyer | strong off-taste |

### Example 2:

Table 6 below illustrates further recipes of the present invention.

**Table 6:**

| | CTRL R | Soy replace | 3 | 4 | 5 | 6 | 7 | 8 | 9 |
|---|---|---|---|---|---|---|---|---|---|
| | | P27. -30 % meat | P27 | P32 | TVP (Solae) | soy | Soy+rice | 3+6 (50:50) | Gluten |
| Water | 35.50 | 24.85 | 24.85 | 24.85 | 24.85 | 24.85 | 24.85 | 24.85 | 24.85 |
| Pork Trims 85/15 | 26.00 | 18.20 | 18.20 | 18.20 | 18.20 | 18.20 | 18.20 | 18.20 | 18.20 |
| Pork Jowl without glands | 20.00 | 14.00 | 14.00 | 14.00 | 14.00 | 14.00 | 14.00 | 14.00 | 14.00 |
| Pork Back Fat 10/90 | 5.00 | 3.50 | 3.50 | 3.50 | 3.50 | 3.50 | 3.50 | 3.50 | 3.50 |
| Phosphates Bullin Van Hees | 0.40 | 0.40 | 0.40 | 0.40 | 0.40 | 0.40 | 0.40 | 0.40 | 0.40 |
| Nitrite Curing Salt | 1.70 | 1.70 | 1.70 | 1.70 | 1.70 | 1.70 | 1.70 | 1.70 | 1.70 |
| Alfa 8 (SCP) | 2.00 | | 2.00 | 2.00 | 2.00 | 2.00 | 2.00 | 2.00 | 2.00 |
| Dried whey, 12% protein | 2.70 | 2.70 | 2.70 | 2.70 | 2.70 | 2.70 | 2.70 | 2.70 | 2.70 |
| Remyline AX-DR | 5.50 | 5.50 | 5.50 | 5.50 | 5.50 | 5.50 | 5.50 | 5.50 | 5.50 |
| Raps Rot | 0.20 | 0.20 | 0.20 | 0.20 | 0.20 | 0.20 | 0.20 | 0.20 | 0.20 |
| Asorbic Acid | 0.05 | 0.05 | 0.05 | 0.05 | 0.05 | 0.05 | 0.05 | 0.05 | 0.05 |
| Spices (frankfurter mix) | 0.45 | 0.45 | 0.45 | 0.45 | 0.45 | 0.45 | 0.45 | 0.45 | 0.45 |
| Preservatice (acetate/citrate) Van Hees | 0.50 | 0.50 | 0.50 | 0.50 | 0.50 | 0.50 | 0.50 | 0.50 | 0.50 |
| RemyLiVe 100 | | 2.00 | | | | | | | |
| Texturat | | 6.50 | 6.50 | 6.50 | 6.50 | 6.50 | 6.50 | 3.25+2.6 | |
| Hydration water | | 19.50 | 19.50 | 19.50 | 19.50 | 19.50 | 19.50 | 19.50 | |
| Rice flour | | | | | | 1.30 | | 0.65 | 1.30 |
| Gluten+water | | | | | | | | | 5.2+19.5 |
| Total% | 100.00 | 100.05 | 100.05 | 100.05 | 100.05 | 100.05 | 100.05 | 94.20 | 100.05 |

26% of final product will come from hydrated texturate: 6.5% texturate+19.5% water

Milled texturate is hydrated with full volume of hydration water prior to addition to cutter; when gluten is added untextured the gluten will not be prehydrated but added directly and water separately.

### Example 3:

### 1. Recipes and preparation:

A product of the following composition has been used:
80% BENEO Pro (gluten 75%) + 20% rice flour

The product has been subjected to an extrusion process using a lab scale Clextral extruder with a 3-mm outlet.

Various process parameters, in particular throughput and the percentage of added water during co-processing, have been varied and examined according to tables 7 and 8.

**Table 7:**

| run | Tex-11 | Tex-12 | Tex-13 | Tex-14 | Tex-15 | Tex-16 | Tex-17 | Tex-18 | Tex-19 | Tex-20 | Tex-21 |
|---|---|---|---|---|---|---|---|---|---|---|---|
| Rotational speed of screw | 243 | | | 243 | 243 | 243 | 243 | 243 | 243 | 243 | 243 |
| Amperage (ampere) | 19.2 | 18.3 | 17.7 | 18.8 | 20.9 | 22.3 | 20.6 | 23/22.3/24 | 25.1 | 25.6 | 26.1 |
| Throughput kg/h | 25.1 | 25.1 | 25.1 | 33.1 | 37 | 42.4 | 44.7 | 49.3 | 53.1 | 56.9 | 60.7 |
| medium | H₂O | H₂O | H₂O | H₂O | H₂O | H₂O | H₂O | H₂O | H₂O | H₂O | H₂O |
| Throughput l/h | 3.75 | 3.4 | 3 | 2.8 | 2.8 | 2.8 | 2.8 | 2.8 | 2.8 | 2.8 | 2.8 |
| Temperature nozzle | 174 | 179 | 172 | 180 | 174 | 174 | 178 | 177 | 177 | 176 | 184 |
| Added water (%) | 13 | 11.9 | 10.7 | 7.8 | 7 | 6.2 | 5.9 | 5.4 | 5 | 4.7 | 4.4 |

**Table 8:**

| run | Tex-22 | Tex-23 | Tex-24 | Tex-25 | Tex-26 | Tex-27 | Tex-28 | Tex-29 | Tex-30 | Tex-31 |
|---|---|---|---|---|---|---|---|---|---|---|
| Rotational speed of screw | 243 | 243 | 243 | 243 | 243 | 243 | 243 | 243 | 243 | 243 |
| Amperage (ampere) | 22.7 | 24.2/23.8 | 24.3 | 23.5/24 | 24.4/24.7 | 25.3 | 25.9/25.7 | 27.4 | 27.5 | 27.8 |
| Throughput kg/h | 60.7 | 60 | 60 | 60 | 60 | 60 | 60 | 60 | 60 | 60 |
| medium | H₂O | H₂O | H₂O | H₂O | H₂O | H₂O | H₂O | H₂O | H₂O | H₂O |
| Throughput l/h | 6.88 | 6.25 | 5.25 | 4.75 | 4.25 | 3.75 | 3.4 | 2.9 | 2.6 | 2.4 |
| Temperature nozzle | 177 | 174 | 175 | 178 | 179 | 183 | 176 | 177 | 182 | 180 |
| Added water (%) | 10.2 | 10 | 8 | 7.3 | 6.6 | 5.9 | 5.4 | 4.6 | 4.2 | 3.8 |

In the experiments shown in table 7, the throughput (kg/h) is increased from run Tex-11 to Tex-21, while the percentage of added water has been decreased.

In the experiments shown in table 8, the throughput (kg/h) has been kept constant at a level of 60 kg/h, while the percentage of added water is decreased from Tex-22 to Tex-31. The best results in terms of stability of the processed mixture are achieved with a low water content, in particular below 11%, in particular with 5.4%. It is shown that with limited water addition, in particular below 11% and most prominently at 5.4%, very stable fibrous products could be obtained whereas at a low water addition below 5% the product has a burnt off-taste resulting in stronger product taste which cannot be characterized as off-taste. Therefore, the effect of improved taste from rice flour is still there but overlaying is the burnt taste.

Water addition >6% resulted in less stable product and water addition below 5% had a burnt taste. Higher water addition is therefore not negative per se if a less stable product is required but decreasing water addition significantly increases product and process stability.

### Example 4:

Table 9 below illustrates five recipes. The control is represented by a conventional meat-based product. Food of the invention A and B is food comprising co-processed mixtures of the present invention at a 12.2% meat replacement whereas the market product comprising textured wheat protein and the market product comprising textured soy protein concentrates at 12.2% meat replacement are used as comparative recipes.

In the food of the invention A 3.5 wt.-% of the present co-processed mixture together with 8.7% hydration water are used to replace meat, while in the food of the invention B the texturate used as meat replacement is a 1:1 mixture of a co-processed mixture of the present invention and textured soy product.

A 12.2 % meat replacement was used in all recipies where a texturate is used: Texturate is always hydrated 1 : 2.5 resulting in 8,7 % water addition on recipe. Only the type or composition of the 3.5 % texturate used varies:
- textured wheat protein of the invention
- textured wheat protein market reference
- textured soy protein concentrate (market product)
- textured wheat protein of the invention (1.75 %) and textured soy protein concentrate (1.75 %)

The market products obtained are very rough requiring pre-milling prior to formulating the food. Unlike the market products comprising textured wheat and textured soy protein, the food of the present invention A and B do not require a pre-milling step.

The sensorial evaluation is given in table 9 and shows that the food of the present invention A scores the best. The soy products show a strong off-taste which is not found for the textured wheat-based product. However, combining the soy protein concentrate with the co-processed mixture of the present invention (food of the present invention B) results in a markedly improved taste, namely a reduced off-taste. Thus, the present invention provides food products with an excellent taste, in particular when used as a partial meat replacer.

**Table 9:**

| | Ctrl | 12.2% meat replacement | | | |
|---|---|---|---|---|---|
| | | Food of invention (A) | Market product textured wheat protein (co-processed wheat protein and wheat flour) | Market product textured soy protein concentrate | Food of invention (B) (50% co-processed mixture of invention + 50% market product textured soy concentrate) |
| Water | 36.50 | 30.20 | | | |
| Pork Trims 85/15 | 24.00 | 21.10 | | | |
| Pork Jowl without glands | 20.00 | 17.00 | | | |
| Pork Back Fat 10/90 | 5.00 | 5.00 | | | |
| Phosphates Bullin Van Hees | 0.40 | 0.40 | | | |
| Nitrite Curing Salt | 1.70 | 1.70 | | | |
| Alfa 8 (SCP) | 2.00 | 2.00 | | | |
| PP70P | 1.00 | 1.00 | | | |
| Dried whey, 12% protein | 2.70 | 2.70 | | | |
| Remyline AX-DR | 5.50 | 5.50 | | | |
| Raps Rot (respective 0.3% of Harimex) | 0.20 | 0.20 | | | |
| Asorbic Acid | 0.05 | 0.05 | | | |
| Spices (frankfurter mix) | 0.45 | 0.45 | | | |
| Preservatice (acetate/citrate) Van Hees | 0.50 | 0.50 | | | |
| Texturat | | 3.50 | | | |
| Hydration water | | 8.70 | | | |
| Total% | 100.00 | 100.00 | | | |
| Sensorial evaluation (ranking 1= best; 4 = least liked) | | 1 | 2 | 4 | 3 |

The present invention further pertains to following aspects:
1. Food product comprising a co-processed mixture of
   a) 50 to 95 weight-% (based on dry weight of the food product) of at least one plant protein-containing composition, wherein at most 45% (based on dry weight of total protein of the food product) of the protein in the food product is rice protein and
   b) 5 to 50 weight-% (based on dry weight of the food product) of at least one rice carbohydrate-containing composition.
2. The food product according to aspect 1, wherein the co-processed mixture is prepared by
   x) providing at least one plant protein-containing composition and at least one rice carbohydrate-containing composition and
   y) co-processing the at least one plant protein-containing composition and the at least one rice carbohydrate-containing composition so as to obtain a co-processed mixture of the at least one plant protein-containing composition and the at least one rice carbohydrate-containing composition.
3. The food product according to any one of aspects 1 or 2, wherein the co-processed mixture is a co-extruded mixture.
4. The food product according to any one of the preceding aspects, wherein the at least one plant protein-containing composition is gluten or a soy protein-containing component.
5. The food product according to any one of the preceding aspects, wherein the soy protein-containing component is soy protein isolate, soy flour or soy concentrate.
6. The food product according to any one of the preceding aspects, wherein the rice carbohydrate-containing composition is rice starch, rice flour or rice bran.
7. The food product according to any one of the preceding aspects, wherein the co-processed mixture contains 4 to 8 weight-% water (based on total weight).
8. The food product according to any one of the preceding aspects, wherein the co-processed mixture contains 0.1 to 5 weight-% (based on dry weight) of at least one taste-modulating agent.
9. The food product according to any one of the preceding aspects, wherein the at least one taste-modulating agent is a flavour, a sweetener or a salt.
10. The food product according to any one of the preceding aspects, wherein the mixture is co-processed into rods, tubes, chunks, flakes, grains, nuggets or strips.
11. A process for preparing the co-processed food product according to any one of aspects 1 to 10 comprising the following process steps
   x) providing at least one plant protein-containing composition and at least one rice carbohydrate-containing composition and
   y) co-processing the at least one plant protein-containing composition and the at least one rice carbohydrate-containing composition so as to obtain the food product according to any one of aspects 1 to 10 comprising a co-processed mixture of the at least one plant protein-containing composition and the at least one rice carbohydrate-containing composition.
12. The process according to aspect 10, wherein the co-processed mixture obtained in process step y) is in a further process step z) dried.
13. A food product obtained according to a process of any one of aspects 11 or 12.
14. The food product according to any one of aspects 1 to 10 and 13, which is hydrated.
15. A food comprising meat and the food product according to any one of aspects 1 to 10, 13 and 14, wherein the ratio of the meat to the food product is from 45 to 99 parts of the meat to 55 to 1 parts of the food product (based on total weight of meat and food product present in the food).
16. A food comprising the food product of any one of aspects 1 to 10, 13 and 14 and at least one food additive, wherein said food does not contain meat.
17. The food according to any one of aspects 15 or 16, which is a ground meat product, a steak product, a sirloin tip product, a kebab product, a shredded product, a chunk meat product, a nugget product, a burger, a sausage, a burrito, chilli con carne, spaghetti bolognese, sloppy joe or tacos.
18. Use of a rice carbohydrate-containing composition for improving the taste of gluten, a gluten-containing composition, soy protein or a soy protein-containing composition.

## Claims

1. Food product comprising a co-processed mixture of
a) 50 to 95 weight-% (based on dry weight of the food product) of at least one plant protein-containing composition, wherein at most 45% (based on dry weight of total protein of the food product) of the protein in the food product is rice protein and
b) 5 to 50 weight-% (based on dry weight of the food product) of at least one rice carbohydrate-containing composition.

2. The food product according to claim 1, wherein the co-processed mixture is prepared by
x) providing at least one plant protein-containing composition and at least one rice carbohydrate-containing composition and
y) co-processing the at least one plant protein-containing composition and the at least one rice carbohydrate-containing composition so as to obtain a co-processed mixture of the at least one plant protein-containing composition and the at least one rice carbohydrate-containing composition.

3. The food product according to any one of claims 1 or 2, wherein the co-processed mixture is a co-extruded mixture.

4. The food product according to any one of the preceding claims, wherein the at least one plant protein-containing composition is gluten or a soy protein-containing component.

5. The food product according to any one of the preceding claims, wherein the soy protein-containing component is soy protein isolate, soy flour or soy concentrate.

6. The food product according to any one of the preceding claims, wherein the rice carbohydrate-containing composition is rice starch, rice flour or rice bran.

7. The food product according to any one of the preceding claims, wherein the co-processed mixture contains 4 to 8 weight-% water (based on total weight).

8. The food product according to any one of the preceding claims, wherein the co-processed mixture contains 0.1 to 5 weight-% (based on dry weight) of at least one taste-modulating agent.

9. The food product according to any one of the preceding claims, wherein the at least one taste-modulating agent is a flavour, a sweetener or a salt.

10. The food product according to any one of the preceding claims, wherein the mixture is co-processed into rods, tubes, chunks, flakes, grains, nuggets or strips.

11. The food product according to any one of the preceding claims, comprising 55 to 85 weight-% water.

12. A food comprising meat and the food product according to any one of claims 1 to 11, wherein the ratio of the meat to the food product is from 45 to 99 parts of the meat to 55 to 1 parts of the food product (based on total weight of meat and food product present in the food).

13. A food comprising the food product of any one of claims 1 to 11 and at least one food additive, wherein said food does not contain meat.

14. The food according to any one of claims 12 or 13, which simulates a ground meat product, a steak product, a sirloin tip product, a kebab product, a shredded product, a chunk meat product, a nugget product, a burger, a sausage, a burrito, chilli con carne, spaghetti bolognese, sloppy joe or tacos.
